(19) Europäisches Patentamt / European Patent Office / Office européen des brevets

(11) **EP 3 660 599 B1**

(12) **FASCICULE DE BREVET EUROPEEN**

(45) Date de publication et mention de la délivrance du brevet:
**22.05.2024 Bulletin 2024/21**

(21) Numéro de dépôt: **19212169.7**

(22) Date de dépôt: **28.11.2019**

(51) Classification Internationale des Brevets (IPC):
**G05B 15/02** *(2006.01)*

(52) Classification Coopérative des Brevets (CPC):
**G05B 15/02;** G05B 2219/2614; G05B 2219/2642;
Y02T 30/00

(54) **PROCÉDÉ POUR DÉTERMINER UNE VALEUR DE CONSIGNE POUR LE PILOTAGE D'UN ÉQUIPEMENT COMMANDABLE D'UN VÉHICULE**

VERFAHREN ZUR BESTIMMUNG EINES SOLLWERTS FÜR DAS STEUERN EINER STEUERBAREN AUSRÜSTUNG EINES FAHRZEUGS

METHOD FOR DETERMINING A SETTING VALUE FOR CONTROLLING A CONTROLLABLE DEVICE OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2018 FR 1872047**

(43) Date de publication de la demande:
**03.06.2020 Bulletin 2020/23**

(73) Titulaire: **ALSTOM Holdings**
**93400 Saint-Ouen-sur-Seine (FR)**

(72) Inventeurs:
• **ABOU-EID, Rami**
**75018 Paris (FR)**
• **CHEVALIER, Philippe**
**92500 Rueil Malmaison (FR)**
• **CHAN, Josselin**
**92320 Chatillon (FR)**

(74) Mandataire: **Lavoix**
**2, place d'Estienne d'Orves**
**75441 Paris Cedex 09 (FR)**

(56) Documents cités:
EP-A1- 2 653 945        WO-A1-2014/043313
US-A1- 2016 056 629

# Description

La présente invention concerne un procédé pour déterminer une valeur de consigne pour le pilotage d'un équipement commandable à bord d'un véhicule. L'invention concerne également un véhicule ferroviaire comprenant un équipement commandable piloté au moyen de ce procédé.

De façon connue, un bâtiment peut être équipé d'un système domotique pouvant être contrôlé par des utilisateurs et comportant notamment un dispositif de climatisation et de ventilation. US 2016/056629 A1 divulgue un exemple d'un système domotique connu.

De façon connue, les véhicules contemporains destinés à transporter des passagers sont généralement équipés de systèmes de climatisation afin d'améliorer le confort des voyageurs, systèmes par ailleurs connus sous la dénomination HVAC, pour « Heating, Ventilation and Air Conditioning » en langue anglaise. Le fonctionnement de ces systèmes de climatisation est régulé par des dispositifs de commande en fonction d'une température de consigne prédéfinie.

Une difficulté réside dans la façon de définir cette température de consigne.

Typiquement, la température de consigne est fixée par un agent de bord, généralement en début de service, au moyen d'un thermostat inaccessible aux passagers. Dans d'autre cas, la température de consigne est prédéfinie par des agents de maintenance, par exemple lors d'une intervention sur le système de climatisation, et n'est pas destinée à être modifiée en cours de fonctionnement du véhicule. Dans d'autre cas, la température de consigne est figée dès la livraison dans le contrôleur du système de climatisation.

Il est alors fréquent que la température de consigne ne soit pas adaptée aux circonstances dans lesquelles le véhicule est amené à se trouver au cours de son fonctionnement, de sorte que la température intérieure du véhicule est soit trop chaude, soit trop froide. Dans le premier cas, si la température est trop élevée, alors le système de climatisation ou de chauffage est perçu comme ne jouant pas son rôle et le confort des passagers est réduit. Dans le deuxième cas, lorsque la température est trop froide, on aboutit également à un inconfort des passagers, ainsi qu'à une consommation d'énergie excessive. Pour des raisons pratiques, il n'est pas toujours possible par le personnel d'exploitation de modifier tout le temps cette température de consigne de façon à satisfaire tous les passagers.

Un problème analogue se pose aussi pour d'autres équipements commandables du véhicule qui altèrent une grandeur physique environnementale perceptible par les passagers et à laquelle tous les passagers sont collectivement assujettis, comme l'intensité lumineuse produite par un système d'éclairage intérieur ou encore le niveau sonore d'annonces vocales émises par un système d'annonce.

C'est à ces inconvénients qu'entend plus particulièrement remédier l'invention, en proposant un dispositif de commande d'un équipement commandable pour un véhicule ferroviaire, permettant de définir de façon améliorée une valeur de consigne pour la régulation de l'équipement commandable.

A cet effet, un aspect de l'invention concerne un procédé conforme à la revendication 1 pour déterminer une valeur de consigne pour le pilotage d'un équipement commandable, cet équipement commandable étant adapté pour modifier de façon commandable une grandeur physique environnementale à l'intérieur d'une voiture d'un véhicule ferroviaire.

Grâce à l'invention, la valeur de consigne destinée à réguler l'équipement commandable est déterminée de façon collective par les passagers, à la manière d'un vote. Cela permet d'agréger les choix individuels exprimés par les passagers et acquis par les appareils de sélection, puis de synthétiser ces choix pour calculer une valeur de consigne optimisée, représentative des choix exprimés par les passagers. De cette manière, la valeur de consigne est choisie de façon plus satisfaisante pour le plus grand nombre de passagers, sans que le personnel d'exploitation ne soit obligé d'intervenir.

Selon des aspects avantageux mais non obligatoires de l'invention, un tel procédé peut incorporer une ou plusieurs des caractéristiques suivantes, prises isolément ou suivant toute combinaison techniquement admissible :

- l'équipement commandable est un système de climatisation destiné à modifier la température d'un volume d'air à l'intérieur de la voiture d'un véhicule ferroviaire, la valeur de consigne étant une température de consigne.
- lors de l'étape b), les valeurs de choix acquises sont des valeurs numériques appartenant à une échelle prédéfinie et exprimant chacune une variation souhaitée de la température par rapport à la valeur courante de la température à l'intérieur de la voiture.
- l'échelle prédéfinie est l'échelle de confort thermique de Fanger, les valeurs numériques étant des nombres entiers relatifs appartenant à l'intervalle [-3 ; +3].
- le procédé comporte, préalablement à l'étape b), des étapes consistant à :

  e) calculer automatiquement, pour chaque valeur de choix proposée aux personnes présentes à l'intérieur de la voiture, la consommation d'énergie requise pour amener la température de l'air à la température correspondant à cette valeur de choix ;
  f) afficher, au moyen d'une interface homme-machine équipant l'appareil de sélection, les valeurs de consommation d'énergie calculées.

- l'étape e) comporte en outre, pour chaque consommation d'énergie calculée, le calcul de la quantité équivalente de CO2 produite, l'étape f) comportant l'affichage, au moyen de l'interface homme-machine, des valeurs de quantités équivalentes de CO2 produites, en remplacement et/ou en complément de l'affichage des valeurs de consommation d'énergie.

- les appareils de sélection sont des terminaux de communication mobile appartenant à des personnes présentes à l'intérieur de la voiture et connectés au dispositif de commande par l'intermédiaire d'un réseau de télécommunications.
- les appareils de sélection appartiennent à la voiture, et notamment au véhicule ferroviaire, et sont connectés au dispositif de commande.

Selon un autre aspect, l'invention concerne une voiture de véhicule ferroviaire conforme à la revendication 9, comprenant :

- un équipement commandable adapté pour modifier de façon commandable une grandeur physique environnementale perceptible par des personnes présentes à l'intérieur de la voiture du véhicule ferroviaire,
- un dispositif de commande de l'équipement commandable, adapté pour réguler le fonctionnement de l'équipement commandable ;

le dispositif de commande étant programmé pour mettre en oeuvre les étapes a) à e) de la méthode suivant la revendication 1.

Selon des aspects avantageux mais non obligatoires de l'invention, une telle voiture peut incorporer la caractéristique suivante : l'équipement commandable est un système de climatisation destiné à modifier la température d'un volume d'air à l'intérieur de la voiture et la valeur de consigne est une température de consigne.

L'invention sera mieux comprise et d'autres avantages de celle-ci apparaîtront plus clairement à la lumière de la description qui va suivre, d'un mode de réalisation d'un procédé de gestion d'un équipement commandable donné uniquement à titre d'exemple et faite en référence aux dessins annexés dans lesquels :

[Fig 1] la figure 1 est une représentation schématique simplifiée d'un véhicule ferroviaire comportant un équipement commandable conforme à l'invention ;

[Fig 2] la figure 2 est un schéma synoptique simplifié d'un dispositif de commande de l'équipement commandable du véhicule ferroviaire de la figure 1 ;

[Fig 3] la figure 3 est un ordinogramme d'un procédé de fonctionnement du dispositif de commande de la figure 2.

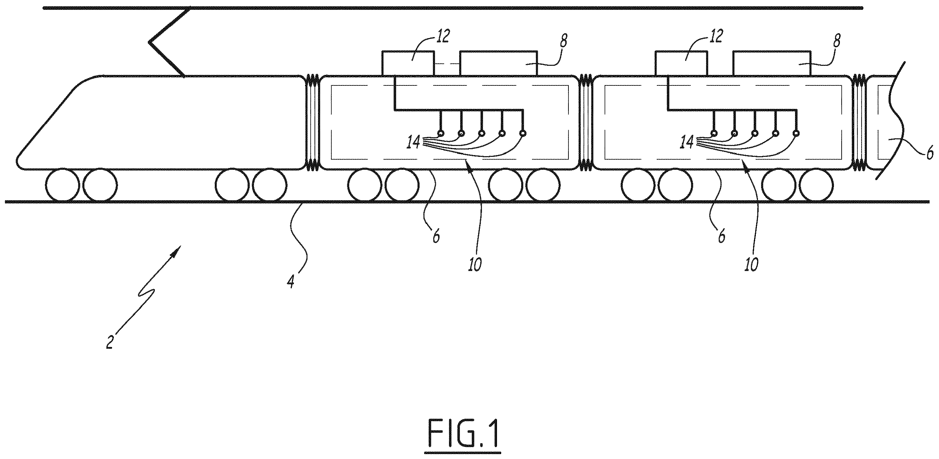

La figure 1 représente un véhicule 2.

Selon des exemples, le véhicule 2 est un véhicule ferroviaire, par exemple un train de passagers ou un véhicule ferroviaire de transport urbain, tel qu'un tramway ou un métro.

De façon connue, le véhicule 2 est adapté pour rouler sur une voie ferrée 4 et comporte à cet effet des roues ferroviaires et au moins un moteur de traction apte à propulser le véhicule 2.

Le véhicule 2 comporte une ou plusieurs voitures ferroviaires 6 destinées à recevoir des passagers. Chaque voiture 6 est équipée d'un équipement commandable destiné à altérer au moins une grandeur physique de l'environnement perçu par les passagers de la voiture 6. Chaque voiture 6 forme une enceinte apte à recevoir des passagers.

En variante, le véhicule 2 est un véhicule routier, tel qu'un autobus ou un autocar, comportant une enceinte pour recevoir des passagers.

Dans cet exemple, l'équipement commandable 8 est un système de climatisation, c'est-à-dire de réfrigération ou chauffage, qui est configuré pour climatiser ou réchauffer un volume 10 à l'intérieur de la voiture 6. Par « climatiser », on entend ici que le système 8 est apte à amener la température de l'air à l'intérieur du volume 10 à une température de consigne prédéfinie, c'est-à-dire à refroidir ou réchauffer l'air à l'intérieur du volume 10.

Dans l'exemple illustré, chaque système de climatisation 8 est reçu dans un coffret technique dédié, ici logé sur le toit de la voiture 6 correspondante. D'autres agencements sont toutefois possibles.

Dans cet exemple, le volume 10, aussi nommé zone 10, occupe tout l'espace utile de la voiture 6.

En variante, plusieurs systèmes de climatisation 8 peuvent être associés à une même voiture 6, pour climatiser plusieurs zones 10 distinctes au sein d'une même voiture 6, ces zones 10 étant par exemple associées à des compartiments distincts de la voiture 6. Dans ce cas, les systèmes 8 peuvent fonctionner indépendamment et donc être pilotés indépendamment.

Selon encore une autre variante, plusieurs systèmes 8 peuvent être utilisés pour climatiser une même zone 10. Dans ce cas, ils fonctionnent conjointement.

Le système 8 est ici adapté pour fonctionner selon un cycle thermodynamique de réfrigération, par exemple basé sur un cycle de détente-compression d'un fluide réfrigérant et comporte notamment un compresseur motorisé, un condenseur et un évaporateur connectés fluidiquement entre eux par un circuit de fluide réfrigérant, ainsi que des échangeurs de chaleur destinés à faciliter le transfert de chaleur entre le fluide réfrigérant et des flux d'air environnant. Un tel système 8 est bien connu, de sorte que son fonctionnement n'est pas décrit plus en détail dans ce qui suit. Il peut comporter aussi des réchauffeurs électriques

Chaque équipement commandable 8 est associé à un dispositif de commande 12, qui régule le fonctionnement de l'équipement commandable 8 en fonction d'une valeur de consigne, dont la nature dépend de la grandeur physique sur laquelle agit l'équipement commandable 8.

Dans cet exemple, le dispositif 12 est notamment adapté pour réguler le fonctionnement du système 8 de manière à amener et maintenir la température de l'air dans la zone 10 à une température de consigne prédéfinie.

Par exemple, le dispositif 12 est configuré pour implémenter un régulateur de température, ici de type proportionnel ou proportionnel-intégral, en fonction d'une température de consigne prédéfinie et d'une température mesurée au moyen d'un capteur de température placé dans la zone 10.

Le dispositif 12 est en outre programmé pour calculer une température de consigne en fonction du choix émis par une pluralité de passagers de la voiture 6. Sur la figure 1, la référence « 14 » désigne des appareils de sélection, connectés au dispositif 12 et destinés à recueillir les choix émis par les passagers de la voiture 6 pour modifier la température de consigne.

Dans cet exemple, les appareils de sélection 14 sont des dispositifs de communication mobile individuels portés par les passagers de la voiture 6, tels que des téléphones cellulaires, des tablettes ou des ordinateurs portables.

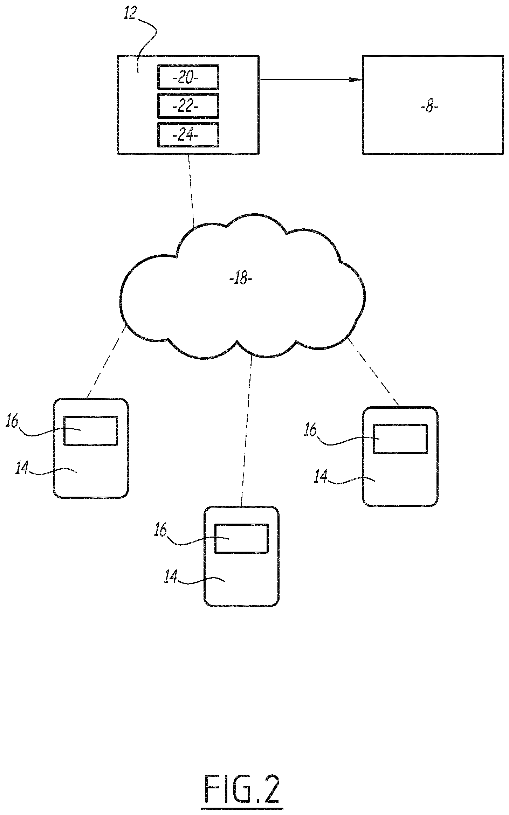

Comme illustré à la figure 2, chaque appareil 14 comporte une interface homme-machine 16, un calculateur électronique et une interface de télécommunication, par exemple radio.

L'interface 16 comporte des moyens d'affichage commandables, comprenant par exemple un écran électronique de type à cristaux liquides ou à plasma ou à diodes organiques lumineuses, et des moyens de saisie, tel qu'un clavier ou un écran tactile.

L'interface de télécommunication est adaptée pour connecter l'appareil 14 avec un réseau de télécommunications 18, tel qu'un réseau de téléphonie cellulaire, le réseau internet ou un réseau informatique local de type WLAN pour « Wireless Local Access Network » en langue anglaise ou LoRaWan. Ce réseau 18 permet de connecter les appareils 14 d'une même voiture 6 au dispositif 12 correspondant.

Par exemple, chaque appareil 14 comporte une application logicielle dédiée précédemment téléchargée, soit avant d'embarquer à bord du véhicule 2, soit téléchargée depuis le réseau 18. En variante, l'appareil 14 accède à une page web implémentée par un serveur web associé au dispositif 12.

Dans cet exemple, comme illustré à la figure 2, le dispositif 12 inclut un calculateur électronique comportant une unité de calcul logique 20, comme un microprocesseur ou un microcontrôleur programmable ; un support d'enregistrement d'informations 22, tel qu'une mémoire informatique, par exemple un module mémoire de technologie Flash ; une interface d'échange 24 de données connectée au réseau 18, ces composants du dispositif 12 étant connectés entre eux par un bus de données interne, non illustré.

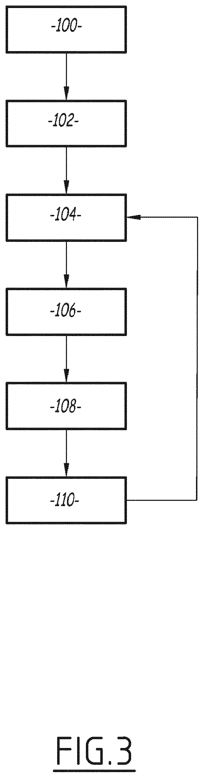

Le support 22 comporte des instructions exécutables pour mettre en oeuvre le procédé de la figure 3, notamment dans le but de déterminer une température de consigne pour réguler le fonctionnement du système 8, lorsque ces instructions sont exécutées par l'unité logique 20.

En particulier, le dispositif 12 est programmé pour mettre à jour la température de consigne, de façon périodique et avec un pas de temps fixe prédéfini, en fonction de la température de consigne appliquée lors du pas de temps précédent et en fonction d'un coefficient de correction de température obtenu à partir des valeurs individuelles de choix collectées par chacun des appareils 14.

Cette mise à jour est ici effectuée à l'aide de la formule suivante :

$$T\_setpoint\_(k+1) = T\_setpoint\_(k) + \Delta T(k)$$

(Equation 1)

où « T_setpoint_(k+1) » désigne la nouvelle température de consigne mise à jour pour l'instant k+1, « T_setpoint_(k) » désigne la température de consigne valable lors de l'instant k, « $\Delta T\_(k)$ » désigne le coefficient de correction de température et « k » désigne un indice entier qui indexe le pas de temps, l'indice k=0 correspondant au pas de temps initial.

Par exemple, la mise à jour est effectuée avec un pas de temps compris entre 5 minutes et 30 minutes, de préférence égal à 15 minutes.

La température de consigne initiale $T_0$, ici pour l'instant initial k=0, est par exemple choisie selon une loi de consigne théorique dépendant de la température extérieure et/ou de la température dans la zone 10 et/ou est initialisée à partir d'une valeur prédéfinie.

Dans cet exemple, chaque appareil 14 collecte une valeur de choix individuelle $\Delta C_i$, où « i » est un indice entier qui indexe chaque appareil 14. Par exemple, les valeurs de choix individuel $\Delta C_i$ sont des valeurs sans unités qui indiquent une variation relative de température par rapport à la température de consigne courante. Avantageusement, les valeurs $\Delta C_i$ sont affichées au moyen de l'interface 16.

Chaque passager peut ainsi sélectionner une valeur numérique comprise sur une échelle prédéfinie pour indiquer une variation souhaitée de température de l'air. Par exemple, une valeur $\Delta C_i$ égale à zéro indique que le passager est satisfait de la température. Une valeur $\Delta C_i$ positive indique que le passager souhaite augmenter la température, d'une amplitude d'autant plus élevée que la valeur est élevée, et une valeur $\Delta C_i$ négative indique qu'il souhaite diminuer la température, d'une amplitude d'autant plus élevée que la valeur absolue de la valeur choisie est élevée.

A tire d'exemple illustratif, on utilise ici une échelle de confort thermique dite de Fanger, avec une valeur de choix individuelle $\Delta C_i$ étant un nombre entier relatif compris dans l'intervalle [-3 ; +3].

Le coefficient de correction de température $\Delta T$

est ici calculé, pour chaque pas de temps, au moyen de la formule suivante :

$$\Delta T\_(k) = f(\Delta C_i) \times T$$

$$(\text{Equation 2})$$

où $f(\Delta C_i)$ est une grandeur statistique représentative des valeurs $\Delta C_i$ acquises par les appareils 14 pendant le pas de temps k, par exemple une moyenne, et « T » est un coefficient multiplicateur, aussi dit pas de température, qui fait correspondre une variation de température aux valeurs $\Delta C_i$. En variante, la grandeur $f(\Delta C_i)$ peut être une valeur médiane ou encore être choisie différemment.

Dans cet exemple, le pas de température T est le même pour toutes les valeurs $\Delta C_i$, par exemple choisie égale à 1°C ou à 2°C.

Les valeurs $\Delta C_i$ acquises sont pondérées en fonction de l'emplacement de l'appareil 14 correspondant au sein de la voiture 6, notamment pour tenir compte de non uniformités de la température de l'air au sein du volume 10 susceptibles de biaiser la perception de certains des passagers, par exemple lorsqu'un passager se situe au voisinage d'une bouche de sortie d'air froid émanant du système 8.

Le dispositif 12 est également programmé pour calculer et mettre à jour, pour chaque pas de temps, une estimation de l'énergie consommée par le système 8.

Par exemple, pour une température de consigne initiale $T_0$ et pour une puissance consommée $P_0$, alors l'énergie consommée sur une période de 1 heure, exprimée en kW/h, est notée $E_0 = P_0 * 1$.

Optionnellement, le système 8 peut également être basculé entre plusieurs modes de fonctionnement, pour une même température de consigne, dans lesquels il fonctionne avec plus ou moins d'intensité et donc consomme plus ou moins de puissance. Ce mode peut être affiché à destination des passagers à l'aide de l'interface 6.

Un exemple de fonctionnement du procédé de supervision est maintenant décrit, en référence à l'ordinogramme de la figure 3 et à l'aide des figures 1 et 2.

Lors d'une étape initiale 100, le procédé est initialisé. Par exemple, cette mise en marche est déclenchée automatiquement lorsque le système 8 est démarré.

Ensuite, lors d'une étape 102, le dispositif 12 est initialisé avec la température de consigne initiale $T_0$ et régule le système 8 pour qu'il amène le volume d'air 10 à cette température de consigne $T_0$.

Puis, lors d'une étape 104, les valeurs $\Delta C_i$ choisies par les passagers sont automatiquement acquises par les appareils 14, puis transmises à destination du dispositif 12, ici par l'intermédiaire du réseau 18. L'étape 104 se termine lorsque le pas de temps prédéfini est écoulé.

On comprend ici que certains passagers peuvent choisir de ne pas exprimer de choix. Ainsi, pour chaque pas de temps, il peut exister des appareils 14 pour lesquels aucune valeur n'est acquise.

Dans cet exemple, lors de l'étape 104, les passagers sélectionnent une valeur de leur choix au moyen de l'interface 16, ici après que les valeurs $\Delta C_i$ permissibles aient été affichées sur l'interface 16. En d'autres termes, le passager choisit une valeur $\Delta C_i$ parmi plusieurs valeurs permissibles affichées sur l'interface 16.

De préférence, les valeurs de choix ainsi sélectionnées et acquises par les appareils 14 sont transmises vers le dispositif 12 dès leur acquisition, puis stockées dans le support 22.

Le choix peut être précédé, pour les différents appareils 14 utilisés, d'une opération d'identification de l'appareil 14, notamment pour identifier la voiture 6 dans laquelle se trouve le passager, mais aussi pour permettre à l'appareil 14 d'identifier le dispositif 12 vers lequel une liaison de communication doit être établie.

Par exemple, cette identification est réalisée au grâce à un support d'identification numérique installé dans la voiture 6. Le support d'identification est, par exemple, une étiquette radiofréquence de type RFID ou NFC, ou un marqueur optique de type code à barre ou de type QR-code, ou tout autre support équivalent. La lecture du support d'identification est effectuée grâce à des moyens de lecture adéquats équipant l'appareil 14, tel que, selon les cas précités, un lecteur radiofréquence RFID ou NFC pourvu d'une antenne, ou un capteur optique. Par exemple, les données encodées par le support d'identification comportent une adresse réseau et/ou un identifiant de type URI, pour « uniform resource identifier » en langue anglaise, qui identifie le dispositif 12 correspondant au sein du réseau 18.

Avantageusement, l'interface 16 affiche également, lors de cette étape 104, pour chaque valeur $\Delta C_i$ proposée au passager, une estimation de la variation d'énergie requise par le système 8 pour atteindre cette variation, qu'il s'agisse d'une surconsommation d'énergie ou d'une économie d'énergie.

A titre d'exemple illustratif, pour une valeur $\Delta C_i$ égale à -1, et un pas de température de 2°C, le choix de la valeur $\Delta C_i$ = -1 correspond à une baisse de la température de consigne de 2°C. Le dispositif 12 calcule, sur la base de l'estimation d'énergie $E_k$ consommée pour ce pas de temps, quelle serait l'énergie $E_{k+1}$ consommée avec une température de consigne abaissée de 2°C.

Avantageusement, pour chaque valeur $\Delta C_i$ proposée, l'interface 16 affiche également une valeur d'équivalent de quantité de $CO_2$ émise du fait du fonctionnement du système 8. Le calcul d'équivalence entre énergie consommée et quantité de $CO_2$ est par exemple réalisé par le dispositif 12 au moyen d'une relation de correspondance prédéfinie. La valeur d'équivalent de quantité de $CO_2$ peut être affichée conjointement à la valeur d'estimation d'énergie consommée, ou bien à la place de cette valeur d'estimation d'énergie consommée.

Ainsi, les passagers sont sensibilisés aux conséquences environnementales de leur choix.

Dans cet exemple, une fois que l'étape 104 est terminée à l'expiration du pas de temps, cette étape 104 est de nouveau réitérée pour acquérir les choix des passagers pendant le pas de temps immédiatement suivant. Les autres étapes décrites ci-dessous sont alors exécutées en parallèle.

Lors d'une étape 106, le dispositif 12 calcule automatiquement le coefficient de correction de température $\Delta T$ à partir des valeurs $\Delta C_i$ acquises pendant le pas de temps écoulé, ici au moyen de la formule précédemment décrite (équation 2).

Ensuite, lors d'une étape 108, la température de consigne corrigée T_setpoint_(k+1) est automatiquement calculée par le dispositif 12, à partir du coefficient de correction de température $\Delta T$ ainsi calculé, ici au moyen de la formule précédemment décrite (équation 1).

Enfin, lors d'une étape 110, la température de consigne ainsi calculée est utilisée par le dispositif 12 pour piloter en conséquence le système 8. Par exemple, le régulateur implémenté par le dispositif 12 est mis à jour avec cette nouvelle valeur de température de consigne.

Les étapes 104, 106, 108 et 110 sont ainsi répétées de façon cycliques au cours du temps, pour les différents pas de temps successifs, par exemple jusqu'à l'arrêt du système 8.

Grâce à l'invention, la température de consigne du système 8 est déterminée de façon collective par les passagers, à la manière d'un vote.

Ainsi, les appareils 14 et le dispositif 12 forment ensemble une interface de sélection de la température de consigne, cette interface permettant d'agréger les choix individuels exprimés par les passagers et acquis par les appareils 14, puis de synthétiser ces choix pour calculer une température de consigne optimisée, représentative des choix exprimés par les passagers.

Selon un autre mode de réalisation non illustré, les appareils 14 appartiennent au véhicule 2. Par exemple, ils sont réalisés sous la forme de boîtiers accessibles aux passagers et intégrés à des parois internes de la voiture 6, ou aux dossiers et/ou aux accoudoirs des sièges de la voiture 6. Dans ce cas, les appareils 14 présentent une forme simplifiée tel qu'un écran d'affichage associé à un nombre réduit de boutons de sélection. Les appareils 14 peuvent aussi être implémentés sous forme logicielle au sein de systèmes de divertissement proposés aux passagers, tels que des écrans interactifs associés aux sièges de la voiture 6.

Dans cet autre mode de réalisation, la connexion des appareils 14 au dispositif 12 peut être réalisée différemment. Par exemple, elle est réalisée au moyen de liaisons filaires. Le réseau 18 est donc modifié en conséquence. Il n'est notamment pas nécessaire de faire appel à un réseau de télécommunications extérieur, comme le réseau internet, pour faire transiter les informations depuis les appareils 14 vers le dispositif 12.

En variante, les valeurs $\Delta C_i$ peuvent être directement des valeurs de consigne de température au lieu d'être des variations prédéfinies de température choisies sur une échelle. Alors les étapes 106 et 108 sont modifiées en conséquence. Par exemple, lors de ces étapes, la température de consigne est déterminée en calculant une moyenne des valeurs $\Delta C_i$ acquises, cette moyenne correspondant à la nouvelle température de consigne.

En variante, l'équipement commandable 8 est un système d'éclairage de l'intérieur de la voiture 6. La valeur de consigne correspond alors à une intensité lumineuse produite par le système d'éclairage. Selon encore une autre variante, l'équipement commandable est un système d'annonce sonore, comprenant des haut-parleurs destinés à émettre des messages vocaux à destinations des passagers de la voiture 6. La valeur de consigne correspond alors à une intensité sonore produite par le système d'annonce sonore.

Les modes de réalisation et les variantes envisagés ci-dessus peuvent être combinés entre eux pour générer de nouveaux modes de réalisation.

## Revendications

1. Procédé pour déterminer une valeur de consigne pour le pilotage d'un équipement commandable (8), cet équipement commandable (8) étant adapté pour modifier de façon commandable une grandeur physique environnementale à l'intérieur d'une voiture (6) d'un véhicule (2) ferroviaire, cette grandeur étant perceptible par des personnes présentes à l'intérieur de la voiture, ce procédé étant **caractérisé en ce qu'**il comporte des étapes consistant à :

   a) initialiser (102) un dispositif de commande (12) de l'équipement (8) avec une valeur de consigne ($T_0$) pour réguler le fonctionnement de cet équipement (8) à cette valeur de consigne ;
   b) acquérir (104) des valeurs individuelles de choix ($\Delta C_i$) exprimées par les personnes présentes à l'intérieur de la voiture (6) au moyen d'appareils de sélection (14), ces choix visant à influer sur la grandeur physique environnementale, les valeurs individuelles de choix acquises étant pondérées en fonction de l'emplacement de l'appareil de sélection correspondant au sein de la voiture (6) ;
   c) calculer (106), au moyen du dispositif de commande (12), une grandeur statistiquement représentative des choix exprimés ;
   d) corriger (108), au moyen du dispositif de commande (12), la valeur de consigne par un coefficient de correction fonction de la grandeur calculée statistiquement représentative des choix exprimés, le fonctionnement de l'équipement (8) étant régulé avec cette valeur de consigne corrigée ;
   e) répéter les étapes b) à d) de façon cyclique avec un pas de temps fixe prédéfini,

la valeur de consigne étant corrigée (106) de façon périodique et avec le pas de temps fixe prédéfini, en fonction de la valeur de consigne appliquée lors du pas de temps précédent et en fonction du coefficient de correction.

2. Procédé selon la revendication 1, **caractérisé en ce que** l'équipement commandable (8) est un système de climatisation destiné à modifier la température d'un volume d'air (10) à l'intérieur de la voiture (6) d'un véhicule ferroviaire (2), et **en ce que** la valeur de consigne est une température de consigne.

3. Procédé selon la revendication 2, **caractérisé en ce que**, lors de l'étape b), les valeurs individuelles de choix ($\Delta C_i$) acquises sont des valeurs numériques appartenant à une échelle prédéfinie et exprimant chacune une variation souhaitée de la température par rapport à la valeur courante de la température à l'intérieur de la voiture (6).

4. Procédé selon la revendication 3, **caractérisé en ce que** l'échelle prédéfinie est l'échelle de confort thermique de Fanger, les valeurs numériques étant des nombres entiers relatifs appartenant à l'intervalle [-3 ; +3].

5. Procédé selon la revendication 3 ou 4, **caractérisé en ce qu'**il comporte, préalablement à l'étape b), des étapes consistant à :

   e) calculer automatiquement, pour chaque valeur individuelle de choix ($\Delta C_i$) proposée aux personnes présentes à l'intérieur de la voiture (6), la consommation d'énergie requise pour amener la température de l'air à la température correspondant à cette valeur de choix ;
   f) afficher, au moyen d'une interface homme-machine (16) équipant chaque appareil de sélection (14), les valeurs de consommation d'énergie calculées.

6. Procédé selon la revendication 5, **caractérisé en ce que** l'étape e) comporte en outre, pour chaque consommation d'énergie calculée, le calcul de la quantité équivalente de $CO_2$ produite, et **en ce que** l'étape f) comporte l'affichage, au moyen de l'interface homme-machine (16), des valeurs de quantités équivalentes de $CO_2$ produites, en remplacement et/ou en complément de l'affichage des valeurs de consommation d'énergie.

7. Procédé selon l'une quelconque des revendications précédentes, **caractérisé en ce que** les appareils (14) de sélection sont des terminaux de communication mobile appartenant à des personnes présentes à l'intérieur de la voiture (6) et connectés au dispositif de commande (12) par l'intermédiaire d'un réseau de télécommunications (18).

8. Procédé selon l'une quelconque des revendications 1 à 6, **caractérisé en ce que** les appareils (14) de sélection appartiennent à la voiture (6), et notamment au véhicule ferroviaire (2), et sont connectés au dispositif de commande (12).

9. Voiture (6) de véhicule ferroviaire (2), comprenant :

   - un équipement commandable (8) adapté pour modifier de façon commandable une grandeur physique environnementale perceptible par des personnes présentes à l'intérieur de la voiture (6) du véhicule (2) ferroviaire,
   - un dispositif de commande (12) de l'équipement commandable, adapté pour réguler le fonctionnement de l'équipement commandable (8) ;

   **caractérisée en ce que** le dispositif de commande (12) est programmé pour mettre en oeuvre des étapes consistant à :

   a) initialiser (102) le dispositif de commande (12) avec une valeur de consigne ($T_0$) pour réguler le fonctionnement de cet équipement (8) à cette valeur de consigne ;
   b) acquérir (104) des valeurs individuelles de choix ($\Delta C_i$) exprimées par les personnes présentes à l'intérieur de la voiture (6) au moyen d'appareils de sélection (14), ces choix visant à modifier la grandeur physique environnementale, les valeurs individuelles de choix acquises étant pondérées en fonction de l'emplacement de l'appareil de sélection correspondant au sein de la voiture (6) ;
   c) calculer (106), au moyen du dispositif de commande (12), une grandeur statistiquement représentative des choix exprimés par les passagers ;
   d) corriger (108), au moyen du dispositif de commande (12), la valeur de consigne par un coefficient de correction fonction de la grandeur calculée statistiquement représentative des choix exprimés, le fonctionnement de l'équipement (8) étant régulé avec cette valeur de consigne corrigée ;
   e) répéter les étapes b) à d) de façon cyclique avec un pas de temps fixe prédéfini,

   la valeur de consigne étant corrigée (106) de façon périodique et avec le pas de temps fixe prédéfini, en fonction de la valeur de consigne appliquée lors du pas de temps précédent et en fonction du coefficient de correction.

**10.** Voiture (6) selon la revendication 9, **caractérisée en ce que** l'équipement commandable (8) est un système de climatisation destiné à modifier la température d'un volume d'air (10) à l'intérieur de la voiture (6) et **en ce que** la valeur de consigne est une température de consigne.

**Patentansprüche**

**1.** Verfahren zum Bestimmen eines Vorgabewerts zum Steuern einer steuerbaren Ausrüstung (8), wobei die steuerbare Ausrüstung (8) angepasst ist, um eine physikalische Umgebungsgröße im Inneren des Wagens (6) eines Schienenfahrzeugs (2) steuerbar zu ändern, wobei diese Größe von Personen im Inneren des Wagens wahrnehmbar ist, wobei das Verfahren **dadurch gekennzeichnet ist, dass** es Schritte umfasst, die aus Folgendem bestehen:

a) Initialisieren (102) einer Steuerungsvorrichtung (12) der Ausrüstung (8) mit einem Vorgabewert ($T_0$), um den Betrieb dieser Ausrüstung (8) auf diesen Vorgabewert zu regulieren;
b) Erfassen (104) von individuellen Auswahlwerten ($\Delta C_i$), die von den in dem Wagen (6) anwesenden Personen mittels Auswahlgeräten (14) geäußert werden, wobei diese Auswahlen darauf abzielen die physikalische Umgebungsgröße zu beeinflussen, wobei die erfassten individuellen Auswahlwerte abhängig von dem Ersatz des entsprechenden Auswahlgeräts innerhalb des Wagens (6) gewichtet werden;
c) Berechnen (106), mittels der Steuerungsvorrichtung (12), einer statistisch repräsentativen Größe der geäußerten Auswahlen;
d) Korrigieren (108), mittels der Steuerungsvorrichtung (12), des Vorgabewerts um einen Korrekturkoeffizienten, der von der berechneten Größe abhängt, die statistisch repräsentativ für die geäußerten Auswahlen ist, wobei der Betrieb der Ausrüstung (8) mit diesem korrigierten Vorgabewert reguliert wird;
e) zyklisches Wiederholen der Schritte b) bis d) mit einem vordefinierten festen Zeitintervall,

wobei der Vorgabewert periodisch und mit dem vordefinierten festen Zeitintervall abhängig von dem Vorgabewert, der während des vorherigen Zeitintervalls angewendet wurde, und abhängig von dem Korrekturkoeffizienten korrigiert (106) wird.

**2.** Verfahren nach Anspruch 1, **dadurch gekennzeichnet, dass** die steuerbare Ausrüstung (8) eine Klimaanlage ist, die dazu bestimmt ist, die Temperatur eines Luftvolumens (10) im Innern des Wagens (6) eines Schienenfahrzeugs (2) zu ändern, und dass der Vorgabewert eine Vorgabetemperatur ist.

**3.** Verfahren nach Anspruch 2, **dadurch gekennzeichnet, dass** in Schritt b) die erfassten individuellen Auswahlwerte ($\Delta C_i$) Zahlenwerte sind, die zu einer vordefinierten Skala gehören und jeweils eine gewünschte Änderung der Temperatur im Vergleich zu dem aktuellen Wert der Temperatur im Inneren des Wagens (6) ausdrücken.

**4.** Verfahren nach Anspruch 3, **dadurch gekennzeichnet, dass** die voreingestellte Skala die Ranger-Skala für thermischen Komfort ist, wobei die numerischen Werte relative ganze Zahlen sind, die zu dem Intervall [-3; +3] gehören.

**5.** Verfahren nach Anspruch 3 oder 4, **dadurch gekennzeichnet, dass** es vor dem Schritt b) Schritte umfasst, die aus Folgendem bestehen:

e) automatisches Berechnen, für jeden individuellen Auswahlwert ($\Delta C_i$), der den Personen im Inneren des Wagens (6) vorgeschlagen wird, des Energieverbrauchs, der erforderlich ist, um die Lufttemperatur auf die Temperatur zu bringen, die diesem Auswahlwert entspricht;
f) Anzeigen, mittels einer Mensch-Maschine-Schnittstelle (16), mit der jedes Auswahlgerät (14) ausgerüstet ist, der berechneten Energieverbrauchswerte.

**6.** Verfahren nach Anspruch 5, **dadurch gekennzeichnet, dass** Schritt e) ferner für jeden berechneten Energieverbrauch die Berechnung der erzeugten $CO_2$-Äquivalenzmenge umfasst, und dass Schritt f) die Anzeige der Werte der erzeugten COs-Äquivalenzmengen mittels der Mensch-Maschine-Schnittstelle (16) umfasst, anstelle und/oder zusätzlich zu der Anzeige der Energieverbrauchswerte.

**7.** Verfahren nach einem der vorherigen Ansprüche, **dadurch gekennzeichnet, dass** die Auswahlgeräte (14) mobile Kommunikationsendgeräte sind, die Personen gehören, die im Inneren des Wagens (6) vorhanden sind, und die über ein Telekommunikationsnetz (18) mit der Steuerungsvorrichtung (12) verbunden sind.

**8.** Verfahren nach einem der Ansprüche 1 bis 6, **dadurch gekennzeichnet, dass** die Auswahlgeräte (14) zu dem Wagen (6), insbesondere zu dem Schienenfahrzeug (2), gehören und mit der Steuereinrichtung (12) verbunden sind.

**9.** Wagen (6) eines Schienenfahrzeugs (2), umfassend:

- eine steuerbare Ausrüstung (8), die angepasst ist, um eine physikalische Umweltgröße steuerbar zu ändern, die von Personen wahrnehmbar ist, die in dem Wagen (6) des Schienenfahrzeugs (2) vorhanden sind,

- eine Steuerungsvorrichtung (12) der steuerbaren Ausrüstung, die angepasst ist, um den Betrieb der steuerbaren Ausrüstung (8) zu regulieren;

**dadurch gekennzeichnet, dass** die Steuerungsvorrichtung (12) programmiert ist, um die folgenden Schritte auszuführen:

a) Initialisieren (102) der Steuerungsvorrichtung (12) mit einem Sollwert ($T_0$), um den Betrieb dieser Ausrüstung (8) auf diesen Sollwert zu regulieren;

b) Erfassen (104) von individuellen Auswahlwerten ($\Delta C_i$), die von den in dem Wagen (6) anwesenden Personen mittels Auswahlgeräten (14) geäußert werden, wobei diese Auswahlen darauf abzielen die physikalische Umgebungsgröße zu ändern, wobei die erfassten individuellen Auswahlwerte abhängig von dem Ersatz des entsprechenden Auswahlgeräts innerhalb des Wagens (6) gewichtet werden;

c) Berechnen (106), mittels der Steuerungsvorrichtung (12), einer statistisch repräsentativen Größe der von den Passagieren geäußerten Auswahlen;

d) Korrigieren (108), mittels der Steuerungsvorrichtung (12), des Vorgabewerts um einen Korrekturkoeffizienten, der von der berechneten Größe abhängt, die statistisch repräsentativ für die geäußerten Auswahlen ist, wobei der Betrieb der Ausrüstung (8) mit diesem korrigierten Vorgabewert reguliert wird;

e) zyklisches Wiederholen der Schritte b) bis d) mit einem vordefinierten festen Zeitintervall,

wobei der Vorgabewert periodisch und mit dem vordefinierten festen Zeitintervall abhängig von dem Vorgabewert, der während des vorherigen Zeitintervalls angewendet wurde, und abhängig von dem Korrekturkoeffizienten korrigiert (106) wird.

10. Wagen (6) nach Anspruch 9, **dadurch gekennzeichnet, dass** die steuerbare Ausrüstung (8) eine Klimaanlage ist, die dazu bestimmt ist, die Temperatur eines Luftvolumens (10) im Innern des Wagens (6) zu ändern, und dass der Vorgabewert eine Vorgabetemperatur ist.

## Claims

1. A method of determining a setpoint value for driving controllable equipment (8), said controllable equipment (8) being adapted to modify, in controllable manner, a physical environmental quantity inside a carriage (6) of a railway vehicle (2), this magnitude being perceptible to persons present inside the carriage, this method being **characterised in that** it comprises steps consisting of:

a) initialising (102) a control device (12) of the equipment (8) with a setpoint value ($T_0$) to regulate the operation of this equipment (8) at this setpoint value;

b) acquiring (104) individual choice values ($\Delta C_i$) expressed by the persons present inside the carriage (6) by means of selection devices (14), these choices being intended to influence the physical environmental variable, the individual choice values acquired being weighted as a function of the replacement of the corresponding selection device within the carriage (6);

c) calculating (106), by means of the control device (12), a quantity statistically representative of the choices made;

d) correcting (108), by means of the control device (12), the setpoint value by a correction coefficient depending on the calculated magnitude statistically representative of the choices expressed, the operation of the equipment (8) being regulated with this corrected setpoint value;

e) repeat steps b) to d) cyclically with a predefined fixed time step,

the setpoint value being corrected (106) periodically and with the predefined fixed time step, as a function of the setpoint value applied in the previous time step and following the correction coefficient.

2. A method according to claim 1, **characterised in that** the controllable equipment (8) is an air-conditioning system for changing the temperature of a volume of air (10) inside the carriage (6) of a railway vehicle (2), and **in that** the set value is a set temperature.

3. A method according to claim 2, **characterised in that**, during step b), the individual choice values ($\Delta C_i$) acquired are numerical values belonging to a predefined scale and each expressing a desired variation in temperature with respect to the current value of the temperature inside the carriage (6).

4. A method according to claim 3, **characterised in that** the predefined scale is the Ranger thermal comfort scale, the numerical values being relative integers belonging to the interval [-3; +3].

5. A method according to Claim 3 or 4, **characterized in that** it comprises, prior to step b), steps consisting of:

e) automatically calculating, for each individual choice value ($\Delta C_i$) proposed to the people present inside the carriage (6), the energy consumption required to bring the air temperature to the temperature corresponding to this choice value;

f) display, by means of a man-machine interface (16) fitted to each selection device (14), the calculated energy consumption values.

6. A method as claimed in claim 5, **characterised in that** step e) further comprises, for each calculated energy consumption, the calculation of the equivalent quantity of $CO_2$ produced, and **in that** step f) comprises the display, by means of the man-machine interface (16), of the values of equivalent quantities of $CO_2$ produced, in place of and/or in addition to the display of the energy consumption values.

7. A method according to any one of the preceding claims, **characterised in that** the selection devices (14) are mobile communication terminals belonging to persons present inside the carriage (6) and connected to the control device (12) via a telecommunications network (18).

8. A method according to any one of claims 1 to 6, **characterised in that** the selection devices (14) belong to the vehicle (6), and in particular to the railway vehicle (2), and are connected to the control device (12).

9. A railway vehicle (2) carriage (6), comprising:

- controllable equipment (8) adapted to controllably modify a physical environmental quantity perceptible by persons present inside the carriage (6) of the railway vehicle (2),
- a control device (12) for the controllable equipment, adapted to regulate the operation of the controllable equipment (8);

**characterised in that** the control device (12) is programmed to implement steps consisting of:

a) initialising (102) the control device (12) with a setpoint value ($T_0$) to regulate the operation of this equipment (8) at this setpoint value;

b) acquiring (104) individual choice values ($\Delta C_i$) expressed by the persons present inside the carriage (6) by means of selection devices (14), these choices aiming to modification of the physical environmental variable, the individual choice values acquired being weighted as a function of the replacement of the corresponding selection device within the carriage (6);

c) calculating (106), by means of the control device (12), a quantity statistically representative of the choices expressed by the passengers;

d) correcting (108), by means of the control device (12), the setpoint value by a correction coefficient depending on the calculated magnitude statistically representative of the choices expressed, the operation of the equipment (8) being regulated with this corrected setpoint value;

e) repeat steps b) to d) cyclically with a predefined fixed time step,

the setpoint value being corrected (106) periodically and with the predefined fixed time step, as a function of the setpoint value applied in the previous time step and following the correction coefficient.

10. A carriage (6) according to claim 9, **characterised in that** the controllable equipment (8) is an air conditioning system intended to modify the temperature of a volume of air (10) inside the carriage (6) and **in that** the set value is a set temperature.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016056629 A1